# EUROPEAN PATENT APPLICATION

(11) **EP 4 841 684 A1**
(43) Date of publication of application: **18.11.2026**
(21) Application number: 26177362.6
(22) Date of filing: 07.05.2026
(51) Int. Cl.: H01M 4/04, H01M 4/133, H01M 4/134, H01M 4/1393, H01M 10/0525, H01M 4/36, H01M 4/38, H01M 4/62

(54) **NEGATIVE ELECTRODE ACTIVE MATERIAL FOR RECHARGEABLE LITHIUM BATTERY, METHOD OF PREPARING THE NEGATIVE ELECTRODE ACTIVE MATERIAL, AND RECHARGEABLE LITHIUM BATTERY INCLUDING THE NEGATIVE ELECTRODE ACTIVE MATERIAL**

(30) Priority: 12.05.2025 KR 20250060945
(71) Applicant: SAMSUNG SDI CO., LTD., Yongin-si, Gyeonggi-do 17084 (KR)
(72) Inventor: LEE, Sung Hoon, 16678 Suwon-si (KR)
(74) Representative: Marks & Clerk LLP

(57) **Abstract**

A negative electrode active material includes silicon nanoparticles, graphene, and an amorphous carbon precursor. The negative electrode active material has an oxygen content of 10% by weight or less.

## Description

### BACKGROUND

### 1. Field of the Disclosure

The present disclosure relates to a negative electrode active material for a rechargeable lithium battery, a method of preparing the negative electrode active material, and a rechargeable lithium battery including the negative electrode active material.

### 2. Discussion of Related Art

With the rapid spread of electronic devices that use batteries, such as mobile phones, notebook computers, and electric vehicles, the demand for secondary batteries having high energy density and high capacity has rapidly increased. Research and development for improving the performance of rechargeable lithium batteries has therefore been conducted.

A rechargeable lithium battery includes a positive electrode and a negative electrode that contain an active material capable of the intercalation and deintercalation of lithium ions. A rechargeable lithium battery produces electric energy by oxidation and reduction reactions when the lithium ions are intercalated into and deintercalated from the positive electrode and the negative electrode.

### SUMMARY OF THE DISCLOSURE

The present disclosure is directed to providing a negative electrode active material for a rechargeable lithium battery, the negative electrode active material has a low amount of oxygen.

The present disclosure is also directed to providing a negative electrode active material for a rechargeable lithium battery that provides improved battery capacity and an improved lifespan.

In addition, the present disclosure is directed to providing a method of preparing a negative electrode active material for a rechargeable lithium battery, with the method having improved efficiency in the milling of silicon precursor particles.

Further, the present disclosure is directed to providing a method of preparing a negative electrode active material for a rechargeable lithium battery.

According to an aspect of the present disclosure, there is provided a negative electrode active material for a rechargeable lithium battery, with the negative electrode active material including silicon nanoparticles, graphene, and an amorphous carbon precursor, and the negative electrode active material has an oxygen content of 10% by weight or less.

According to another aspect of the present disclosure, there is provided a negative electrode active material for a rechargeable lithium battery, with the negative electrode active material including a core including silicon nanoparticles, graphene, and amorphous carbon; and an amorphous carbon-containing layer disposed on the core, and the negative electrode active material has an oxygen content of 10% by weight or less.

According to still another aspect of the present disclosure, there is provided a method of preparing a negative electrode active material for a rechargeable lithium battery, which includes milling silicon precursor particles, graphite, and an amorphous carbon precursor in a milling solvent having a viscosity of 0.1 to 1 mPa·s at 25 °C.

According to yet another aspect of the present disclosure, there is provided a rechargeable lithium battery including a negative electrode including the negative electrode active material for a rechargeable lithium battery; and a positive electrode.

At least some of the above and other features of the invention are set out in the claims.

### BRIEF DESCRIPTION OF THE DRAWINGS

FIG. 1 illustrates a negative electrode active material according to an embodiment.
FIGS. 2 to 5 are cross-sectional views of rechargeable lithium batteries according to embodiments.

### DETAILED DESCRIPTION OF EMBODIMENTS

Hereinafter, embodiments of the present disclosure will be described in detail. However, they are provided as examples, and the present disclosure is not limited thereto.

Terms or words used in this specification and claims should not be interpreted as limited to their typical or dictionary meanings, but should be interpreted with meanings and concepts that conform to the technical idea of the present disclosure based on the principle that the inventor can appropriately define the concept of the term in order to explain their own invention in the best way. Therefore, it should be understood that the embodiments described in this specification and the configurations illustrated in the drawings are only some of the most preferred embodiments of the present disclosure and do not represent all of the technical idea of the present disclosure, and various equivalents and modifications may exist at the time of filing this application.

When used in this specification, "comprise" and "include" and/or "comprising" specify the presence of mentioned shapes, numbers, steps, operations, elements, components and/or groups thereof, and do not exclude the presence or addition of one or more other shapes, numbers, operations, elements, components and/or groups. Additionally, when describing embodiments of the present disclosure, the phrase "may be" may include "one or more embodiments of the present disclosure."

Furthermore, to aid understanding of the disclosure, the drawings may not be drawn to scale, but rather, the dimensions of some components may be exaggerated. Furthermore, the same reference numbers may be assigned to the same components in different embodiments.

Unless otherwise specified herein, when a part such as a layer, film, region, plate, etc. is described as being "on" another part, it includes not only the case where the part is "directly on" the other part but also the case where there is still another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D50" may refer to the average particle diameter, which means the diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, a D50 value may be obtained by measuring the particle diameter using a measuring device using dynamic light scattering, performing data analysis to count the number of particles for each particle size range, and then calculating the particle diameter therefrom. Alternatively, D50 may be measured using a laser diffraction method. More specifically, when measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of about 28 kHz at an output of 60 W, and the D50 based on 50% of the particle diameter distribution in the measurement device may be calculated.

The particle diameter may be measured using a particle size analyzer (Beckman Coulter, LS 13 320 XR), but the present disclosure is not be limited thereto.

According to an embodiment, a method of preparing a silicon-carbon composite as a negative electrode active material for a rechargeable lithium battery is provided.

When the concentration of oxygen in the negative electrode active material is high, lithium ions may react with oxygen during charging and discharging of the battery, which reduces the battery capacity and increases the risk of the battery exploding in the event of a fire. Oxygen in the negative electrode active material may be incorporated into the negative electrode active material at several stages during the preparation process of the negative electrode active material. However, oxygen is likely to be incorporated in the largest amount during the process of preparing silicon nanoparticles through milling of silicon precursor particles.

The preparation method of the present disclosure includes milling silicon precursor particles to prepare silicon nanoparticles. The milling may be performed at 25 °C in a milling solvent having a viscosity of 0.1 to 1 mPa·s. As such, the preparation method is highly efficient in the milling of the silicon precursor particles and thereby has a significantly shorter milling time required to prepare silicon nanoparticles. The shorter milling may also in turn lower the concentration of oxygen in the negative electrode active material, thereby improving the capacity and lifespan of the battery.

When the silicon precursor particles are milled in the preparation method, the milling is performed in the presence of graphite and an amorphous carbon precursor. The graphite and the amorphous carbon precursor may further reduce the concentration of oxygen in the negative electrode active material. Therefore, the preparation method not only has excellent processability and economic efficiency in the preparation of the negative electrode active material, but also may be used to prepare a negative electrode active material having improved battery capacity and lifespan.

The preparation method includes milling silicon precursor particles, graphite, and an amorphous carbon precursor in a milling solvent including a solvent having a viscosity of 0.1 to 1 mPa·s at 25°C. The milling step may include preparing a first silicon-carbon composite. The first silicon-carbon composite may be spheroidized by the milling.

The first silicon-carbon composite may include silicon nanoparticles, graphene, and an amorphous carbon precursor. The first silicon-carbon composite may have an oxygen content of 10% by weight or less.

The first silicon-carbon composite may be converted into a second silicon-carbon composite. The second silicon-carbon composite includes cores including silicon nanoparticles, graphene, and amorphous carbon; and an amorphous carbon-containing layer disposed on the cores. The second silicon-carbon composite has an oxygen content of 10% by weight or less.

The first silicon-carbon composite and the second silicon-carbon composite may each be used as negative electrode active materials for a rechargeable lithium battery.

Hereinafter, the preparation method will be described in detail.

### Milling

In the milling step, the silicon precursor particles may be converted into silicon nanoparticles. The silicon nanoparticles are prepared by milling the silicon precursor particles in a milling solvent. The milling may be, for example, ball milling such as zirconium ball milling.

The silicon precursor particles have an average particle diameter D50 of several micrometers. For example, the silicon precursor particles may have an average particle diameter D50 of 10 µm or less, 5 µm or less, or 1 µm or less. In some embodiments, the silicon precursor particles may solely consist of silicon.

In the preparation method, the viscosity at 25 °C of the milling solvent used in milling the silicon precursor particles is controlled. In some embodiments, the solvent has a viscosity of 0.1 to 1 mPa·s at 25 °C. As another example, the solvent may have a viscosity of 0.1 to 0.5 mPa·s at 25 °C. A solvent having a viscosity of more than 1 mPa·s at 25 °C may increase the milling time by lowering the number of collisions between the silicon precursor particles and the milling balls during milling of the silicon precursor particles due to the very high viscosity of the solvent, thereby increasing the concentration of oxygen in the negative electrode active material.

Here, the viscosity of the solvent may be evaluated by the Brookfield model (model name: DVELV) rotational viscometer method. In this method, the spindle rotation speed is set to 30 rpm, and the measurement is made at a room temperature of 25 °C.

In a specific embodiment, the solvent may be an oxygen-free solvent that does not contain oxygen. The oxygen-free solvent may further lower the concentration of oxygen bound to the silicon nanoparticles.

In specific embodiments, the solvent may be one or more of n-hexane, toluene, N-methyl-2-pyrrolidone, dimethyl formamide, and ethanol. In other specific embodiments, the solvent may be n-hexane. n-Hexane may significantly increase the fluidity of milling balls, especially zirconium balls, during milling to increase the number of collisions between the silicon precursor particles and the milling balls, thereby significantly shortening the milling time. Also, n-hexane may allow the silicon precursor particles to aggregate better to increase the number of collisions with the milling balls, thereby enhancing the milling efficiency of the silicon precursor particles. In addition, n-hexane may enable the silicon nanoparticles to be recycled by allowing the silicon nanoparticles to aggregate after the milling is completed. Further, the n-hexane may facilitate the formation of an aggregated structure of graphene (as described below).

When the milling is performed in the presence of the mixture of the silicon precursor particles and the amorphous carbon precursor without graphite, the concentration of oxygen in the negative electrode active material may increase. Thus, in some embodiments, the milling is performed in the presence of a mixture of the silicon precursor particles, graphite, and the amorphous carbon precursor.

In order for the oxygen concentration of the negative electrode active material to reach 10% by weight or less, it may be desirable to perform the milling in the presence of the graphite and the solvent having a viscosity of 0.1 to 1 mPa·s at 25 °C. The milling with the milling solvent may separate the graphene from the graphite.

During the milling, the silicon nanoparticles prepared from the silicon precursor particles may be present between the graphene sheets. Thus, contact between the silicon nanoparticles and oxygen is reduced, and, in turn, the concentration of oxygen in the negative electrode active material may be reduced. It is well known that multiple plate-shaped graphene sheets are laminated in graphite compounds. Therefore, the milling may separate the graphite into multiple plate-shaped graphene sheets.

The amorphous carbon precursor may be well dispersed in the milling solvent. Accordingly, the amorphous carbon precursor may significantly reduce the concentration of oxygen in the negative electrode active material by filling the pores formed between the graphene and the silicon nanoparticles, and thereby further reducing the pores formed between the silicon nanoparticles.

The amorphous carbon precursor may be a polyimide-based resin, a furan resin, a phenol resin, a polyvinyl alcohol resin, a poly(meth)acrylic acid resin, a polyurethane resin, a cellulose resin, an epoxy resin, a polystyrene resin, petroleum-based pitch, coal-based pitch, green coke, mesophase pitch, coal-based oil, petroleum-based heavy oil, coke, or a combination thereof. In a particular example, the amorphous carbon precursor may be mesophase pitch.

The milling may also be performed in the presence of an additive. The additive may act as a dispersant and disperse the silicon precursor particles by modifying the surface of the silicon precursor particles, thereby enhancing the milling efficiency of the silicon precursor particles. In related art, a compound having a carboxylic acid group, such as stearic acid, has been used as the additive. But because stearic acid has a carboxylic acid group, it may react with the silicon precursor particles or the silicon nanoparticles during the milling to oxidize the silicon particles, thereby reducing the capacity of the battery. In embodiments of the present disclosure, the additive may include a 1-alkyne compound having 3 or more carbon atoms in the main chain thereof. The 1-alkyne has an alkynyl group at the terminal end thereof. The 1-alkyne compound may disperse the silicon nanoparticles without oxidizing the silicon nanoparticles by allowing the alkynyl group at the terminal end of the compound to react with the surfaces of the silicon precursor particles or the silicon nanoparticles. In specific embodiments, the compound may be a 1-alkyne compound having 3 to 10 carbon atoms in the main chain thereof. For example, the compound may be 1-hexyne.

The 1-hexyne may facilitate the dispersion of the silicon nanoparticles by allowing the alkynyl group of the 1-hexyne to bond to the surfaces of the silicon precursor particles.

The milling may be performed after the silicon precursor particles and milling balls are mixed with a solvent (including the milling solvent), graphite, and an amorphous carbon precursor. In a specific embodiment, the milling solvent, the silicon precursor particles, and the mixture of the graphite and the amorphous carbon precursor may be included in a weight ratio (the milling solvent : the silicon precursor particles : the mixture of the graphite and the amorphous carbon precursor) of 70 to 99:0.5 to 15:0.5 to 15, based on a total of 100 parts by weight of the milling solvent, the silicon precursor particles, and the mixture of the graphite and the amorphous carbon precursor. In this range, the silicon nanoparticles may be efficiently prepared. The weight ratio (the milling solvent : the silicon precursor particles : the mixture of the graphite and the amorphous carbon precursor) of the milling solvent, the silicon precursor particles, and the mixture of the graphite and the amorphous carbon precursor may be 75 to 90:5 to 15:5 to 15, or 80:10:10, based on a total of 100 parts by weight of the milling solvent, the silicon precursor particles, and the mixture of the graphite and the amorphous carbon precursor.

In the mixture of the graphite and the amorphous carbon precursor, the graphite and the amorphous carbon precursor may be included in a weight ratio (the graphite : the amorphous carbon precursor) of 10 to 50:50 to 90, for example, 10:90, 20:80, or 30:70, based on a total of 100 parts by weight of the graphite and the amorphous carbon precursor.

The milling may be performed at 20 °C to 35 °C, for example, 25 °C to 35 °C. In this range, silicon nanoparticles having a desired average particle diameter D50 may be high and may be efficiently prepared.

The milling may be performed for 10 to 25 hours, for example, 10 to 20 hours, or 10 to 16 hours. In this time range, silicon nanoparticles having a desired average particle diameter D50 may be efficiently prepared.

The silicon nanoparticles may have an average particle diameter D50 of 10 nm to 200 nm, for example, 50 nm to 150 nm, for example, 50 nm to 100 nm. In this range, a negative electrode active material having excellent battery capacity may be provided.

In a specific embodiment, the silicon nanoparticles may be primary particles. The first silicon-carbon composite prepared by the milling may be used as a negative electrode active material for a rechargeable lithium battery without any additional heat treatment.

In other embodiments, the first silicon-carbon composite prepared by the milling may be converted into a second silicon-carbon composite. The second silicon-carbon composite may also be used as a negative electrode active material for a rechargeable lithium battery.

The first silicon-carbon composite itself may be used to prepare the second silicon-carbon composite, or a dispersion (first silicon-carbon composite dispersion) including the first silicon-carbon composite may be used. The first silicon-carbon composite dispersion may include a solvent that is easily volatilized without oxidizing the first silicon-carbon composite. The solvent may be, for example, n-hexane. The concentration of the first silicon-carbon composite in the first silicon-carbon composite dispersion may be 10 to 30% by weight.

### Heat treatment

The second silicon-carbon composite may be prepared by mixing the first silicon-carbon composite with the amorphous carbon precursor and heat-treating the resulting mixture. Alternatively, the second silicon-carbon composite may be prepared by mixing an assembly of the first silicon-carbon composite with the amorphous carbon precursor and heat-treating the resulting mixture.

The assembly of the first silicon-carbon composite may be prepared by spray-drying a dispersion including the first silicon-carbon composite. The spray drying may be used to assemble the first silicon-carbon composite into micrometer-sized secondary particles.

Further, the spray drying may control the sphericity of the negative electrode active material to be prepared through the selection of the type of nozzle and the atmosphere used. That is, it is desirable to use a two-fluid nozzle capable of mixing two fluids (liquid and gas) to form fine particles. When the two-fluid nozzle is used, fine spherical particles may be formed. In this case, because the formed particles have a small size, an additional pulverization process is not required, and thus the spherical shape may be maintained. If a disk-type nozzle that sprays while rotating is used as a nozzle, large particles are formed. In such a case, because the particles have a large size, an additional pulverization process is required. Therefore, the particles having various shapes such as spherical, elliptical, and donut shapes are formed, which may not be desirable.

The spray drying may be performed under a N₂ atmosphere, for example, while blowing N₂ at a flow rate of 30 L/min to 50 L/min or a flow rate of 30 L/min to 40 L/min. When the flow rate of N₂ being blown is within these ranges, the spray drying may form spherical microparticles having an appropriate size. When the flow rate of N₂ is less than 30 L/min, the sprayed products may agglomerate, thereby increasing the size of the prepared particles, which is not desirable. On the other hand, when the flow rate of N₂ is greater than 50 L/min, there may be a problem that a large amount of fine powder may be generated due to the very small size of the prepared particles.

The spray drying may be performed at 50 °C to 170 °C. When the spray drying is performed in the above temperature range, the temperature is sufficiently higher than the boiling point of the solvent so that microsized spherical Si particles may be sufficiently dried through instantaneous volatilization, which is desirable. In some examples, the spray drying may be performed at 50 °C to 150 °C.

The amorphous carbon precursor may be a polyimide-based resin, a furan resin, a phenol resin, a polyvinyl alcohol resin, a poly(meth)acrylic acid resin, a polyurethane resin, a cellulose resin, an epoxy resin, a polystyrene resin, petroleum-based pitch, coal-based pitch, green coke, mesophase pitch, coal-based oil, petroleum-based heavy oil, coke, or a combination thereof. In a particular example, the amorphous carbon precursor may be mesophase pitch.

The first silicon-carbon composite or the assembly of the first silicon-carbon composite and the amorphous carbon precursor may be included in a weight ratio of 20:80 to 99:1 (first silicon-carbon composite/assembly of the first silicon-carbon composite : amorphous carbon) based on a total of 100 parts by weight of the first silicon-carbon composite or the assembly of the first silicon-carbon composite and the amorphous carbon precursor. In this weight ratio range, a negative electrode active material having excellent battery capacity may be prepared. In further examples, the weight ratio may be 50:50 to 99:1, or 60:40 to 96:4.

The heat treatment may be performed at 400 °C to 1,200 °C, or 700 °C to 1,000 °C. When the heat treatment is performed in these temperature ranges, the shape of the negative electrode active material may remain spherical. Further, as the amorphous carbon is carbonized, the conductivity of the negative electrode active material may be improved, and the initial efficiency of the battery may be improved.

The heat treatment may be performed under a N₂ atmosphere. With such a heat treatment process the amorphous carbon precursor is converted into amorphous carbon and, thus, the amorphous carbon precursor may be included as amorphous carbon in the negative electrode active material.

The mixing with the amorphous carbon precursor and the heat treatment may be performed one or more times. For example, the mixing with the amorphous carbon precursor and the heat treatment may be performed two or more times.

Hereinafter, a method of performing the mixing with the amorphous carbon precursor and the heat treatment is described in detail.

### Primary mixing and heat treatment

The first silicon-carbon composite or the assembly of the first silicon-carbon composite is mixed with the amorphous carbon precursor, and the resulting mixture is heat-treated.

The amorphous carbon precursor is substantially the same as described above. For example, the amorphous carbon precursor may be mesophase pitch.

The first silicon-carbon composite or the assembly of the first silicon-carbon composite and the amorphous carbon precursor may be included in a weight ratio of 20:80 to 99:1 (first silicon-carbon composite/assembly of the first silicon-carbon composite : amorphous carbon) based on a total of 100 parts by weight of the first silicon-carbon composite or the assembly of the first silicon-carbon composite and the amorphous carbon precursor. In this weight ratio range, a negative electrode active material having excellent battery capacity may be prepared. For example, the weight ratio may be 50:50 to 99:1, or 50:50 to 70:30, or 55:45.

The heat treatment may be performed at 400 °C to 1,200 °C, or 700 °C to 1,000 °C, or 800 °C to 1,000 °C. When the heat treatment is performed in these temperature ranges, the shape of the negative electrode active material may remain spherical. Further, as the amorphous carbon is carbonized, the conductivity of the negative electrode active material may be improved and the initial efficiency of the battery may be improved.

The heat treatment may be performed under a N₂ atmosphere.

### Secondary mixing and heat treatment

The product prepared in the primary mixing and heat treatment is mixed with the amorphous carbon precursor, and the resulting mixture is heat-treated.

The amorphous carbon precursor is substantially the same as described above. For example, the amorphous carbon precursor may be mesophase pitch.

The product prepared in the primary mixing and heat treatment may be used as is. In other cases, the product may be pulverized, mixed with the amorphous carbon precursor, and then heat-treated.

The pulverized material prepared in the primary mixing and heat treatment and the amorphous carbon precursor may be included in a weight ratio of 20:80 to 99.9:0.1 (pulverized material : amorphous carbon precursor) based on a total of 100 parts by weight of the pulverized material and the amorphous carbon precursor. In this weight ratio range, a negative electrode active material having excellent battery capacity may be prepared. For example, the weight ratio may be 50:50 to 99:1, or 60:40 to 96:4, or 90:10 to 95:5, or 95:5.

The heat treatment may be performed at 400 °C to 1,200 °C, or 700 °C to 1,000 °C, or 800 °C to 1,000 °C. When the heat treatment is performed in these temperature ranges, the shape of the negative electrode active material may remain spherical. As the amorphous carbon is carbonized, the conductivity of the negative electrode active material may be improved and the initial efficiency of the battery may be improved.

The heat treatment may be performed under a N₂ atmosphere.

Before the heat treatment, the pulverized material and the amorphous carbon precursor may be mixed with solvent and then dried. More specifically, the pulverized material and the amorphous carbon may be mixed in a mixed solvent, stirred, and then dried. The mixed solvent may be an aqueous solvent that may include, for example, water and alcohol in a weight ratio (water : alcohol) of 0.5 to 5:1, for example, 1 to 5:1, or 3:1. In this range, the of the silicon nanoparticles may increase. The alcohol may be a monoalcohol having 1 to 5 carbon atoms in the main chain thereof, for example, ethanol. The drying may be performed at 50 °C to 300 °C, for example, 50 °C to 150 °C, or 100 °C. The drying time may be 1 to 5 hours, for example, 1 to 3 hours.

### Negative electrode active material for rechargeable lithium battery

Hereinafter, a negative electrode active material for a rechargeable lithium battery will be described.

### <First silicon-carbon composite>

According to an embodiment, a negative electrode active material for a rechargeable lithium battery includes silicon nanoparticles, graphene, and an amorphous carbon precursor, and the negative electrode active material has an oxygen content of 10% by weight or less. Thus, the degree of lithium ion reaction with oxygen in the negative electrode active material during charging and discharging of a battery may be low, thereby enhancing the battery capacity and reducing the risk of the battery exploding in the event of a fire. In some examples, the negative electrode active material may have an oxygen content of 0 to 10% by weight, for example, , 1, 2, 3, 4, 5, 6, 7, 8, 9, 10% by weight, 1 to 9% by weight.

The negative electrode active material may be prepared using the above-described method of preparing a negative electrode active material.

The silicon nanoparticles may have an average particle diameter (D50) of 10 nm to 200 nm, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 nm, 50 nm to 150 nm, for example, 50 nm or more, 60 nm or more, 70 nm or more, or 80 nm or more and 150 nm or less, 140 nm or less, 130 nm or less, or 115 nm or less. When the average particle diameter (D50) of the silicon nanoparticles falls is within these ranges, side reactions with the electrolyte may be suppressed and expansion of the silicon nanoparticles may be reduced, thereby improving the initial efficiency and lifespan characteristics.

The graphene may be derived from the above-described graphite. The silicon nanoparticles may be present between the graphene sheets.

The amorphous carbon precursor may be the same as described above. For example, the amorphous carbon precursor may be mesophase pitch.

The amorphous carbon precursor may be present in the graphene and the silicon particles, may be present between the graphene sheets. The amorphous carbon precursor may also be present between the silicon particles.

The silicon nanoparticles, the graphene, and the amorphous carbon precursor may be included in amounts of 30 to 75% by weight, for example 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75% by weight, 1 to 30% by weight, for example 1, 2, 3, 4, 5, 6, 7, 8, 9, 10, 11, 12, 13, 14, 15, 16, 17, 18, 19, 20, 21, 22, 23, 24, 25, 26, 27, 28, 29, 30% by weight, and 20 to 60% by weight, for example 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60% by weight, respectively, based on the total weight of the negative electrode active material. Within these ranges, the amount of oxygen in the negative electrode active material may be lowered, thereby effectively improving capacity and lifespan, and electrical conductivity may be improved through the amorphous carbon precursor.

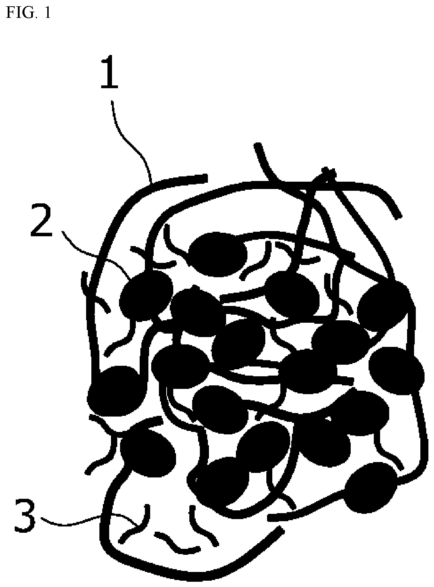

FIG. 1 illustrates a negative electrode active material according to an embodiment.

Referring to FIG. 1, the negative electrode active material includes silicon nanoparticles 2, graphene 1, and an amorphous carbon precursor 3. Here, the graphene 1 has an aggregated structure, and the silicon nanoparticles 2 and the amorphous carbon precursor 3 may be included within the aggregated structure of the graphene 1.

The term "aggregated structure" as used herein refers to a structure in which multiple graphene sheets are aggregated. In a specific embodiment, the aggregated structure is spherical. Therefore, the density of the negative electrode active material in the negative electrode active material layer may be increased by increasing the sphericity of the negative electrode active material.

### <Second silicon-carbon composite>

According to an embodiment, the negative electrode active material for a rechargeable lithium battery includes a core including silicon nanoparticles, graphene, and amorphous carbon; and an amorphous carbon-containing layer disposed on the core, and the negative electrode active material has an oxygen content of 10% by weight or less for example, 0, 1, 2, 3, 4, 5, 6, 7, 8, 9, 10% by weight, 1 to 9% by weight.

The negative electrode active material for a rechargeable lithium battery includes the core; and an amorphous carbon-containing layer disposed on the core.

The silicon nanoparticles, the graphene, the aggregated structure, and the oxygen content are each the same as described above.

The silicon nanoparticles may be present between the graphene sheets.

The amorphous carbon may be present in the graphene and the silicon particles, may be present between the graphene sheets, and may also be present between the silicon particles.

In the negative electrode active material for a rechargeable lithium battery, the amorphous carbon may be derived from carbonization of the amorphous carbon precursor. The amorphous carbon may be soft carbon, hard carbon, mesophase pitch carbide, calcined coke, or a combination thereof. For example, the term "soft carbon" may refer to graphitizable carbon materials and may be readily graphitized by heat treatment at a high temperature, e.g., 2800 °C, and "hard carbon" may refer to non-graphitizable carbon materials and may be slightly graphitized by heat treatment.

When the amorphous carbon is included in the core, the volume of pores in the negative electrode active material may be reduced, thereby suppressing side reactions with the electrolyte. Also, when the silicon nanoparticles in the negative electrode active material expand, the expansion of the silicon nanoparticles may be buffered, thereby suppressing battery expansion. Because the amorphous carbon acts as a binder, the amorphous carbon may mitigate breakage of the negative electrode active material, thereby maintaining the shape of the negative electrode active material.

The amorphous carbon-containing layer includes amorphous carbon. The amorphous carbon may be derived from the amorphous carbon precursor.

The amorphous carbon-containing layer may have a thickness of 1 nm to 900 nm, for example, 5 nm to 800 nm. Therefore, the specific surface area of the negative electrode active material may be reduced and the electrolyte may be prevented from being introduced into the negative electrode active material. As a result, side reactions with the electrolyte may be minimized and the lifespan characteristics of a battery including the negative electrode active material may be improved.

The amorphous carbon may be soft carbon, hard carbon, mesophase pitch carbide, calcined coke, or a combination thereof. The amorphous carbon may be the same as or different from the amorphous carbon included in the core.

In the negative electrode active material, the amount of the silicon nanoparticles, the graphene, and the amorphous carbon may be in a weight ratio (the silicon nanoparticles : the graphene : the amorphous carbon) of 38 to 50 for example. 38, 39, 40, 41, 42, 43, 44, 45, 46, 47, 48, 49, 50) : 6 to 18 (for example 6, 7, 8, 9, 10, 11, 12, 13, 14, 15, 16, 17, 18) : 34 to 52 (for example 34, 35, 36, 37, 38, 39, 40, 41, 42, 43, 44, 45, 46, 47, 48, 49, 50, 51, 52) based on a total of 100 parts by weight of the silicon nanoparticles, the graphene and the amorphous carbon.

The negative electrode active material may have an average particle diameter (D50) of 2 µm to 15 µm, for example, 3 µm to 13 µm, or 5 µm to 10 µm. When the average particle diameter of the negative electrode active material is in this range, lithium ions may easily diffuse into the negative electrode active material, and the battery resistance and rate characteristics may be improved. Further, excessive increase in the specific surface area of the negative electrode active material may be suppressed, thereby reducing side reactions with the electrolyte.

The above average particle size (D50) of the negative electrode active material may be achieved by appropriately controlling the milling and/or spray drying conditions during the preparation of the negative electrode active material.

In one specific embodiment, the negative electrode active material may have an elliptical or spherical cross-section.

In the negative electrode active material, the silicon nanoparticles are primary particles. These primary particles may be assembled from secondary particles. Accordingly, the negative electrode active material may include secondary particles in which Si nanoparticles are assembled.

The amorphous carbon may be disposed to cover the surfaces of the secondary particles. That is, the negative electrode active material may include a core including silicon nanoparticles, for example, a secondary particle core comprising secondary particles assembled from primary particles, with amorphous carbon surrounding secondary particles of the core. In an embodiment, the core refers to a region disposed inside the active material. Because the core is surrounded by the amorphous carbon, the core refers to a region that is not substantially exposed to the outside. Therefore, a region disposed inside the amorphous carbon may be viewed as the core.

The amorphous carbon may be filled between the primary particles. When the amorphous carbon is filled between the primary particles, the amorphous carbon covers the surfaces of the primary particles. In this way, when the amorphous carbon is filled between the primary particles, and the volume of the pores in the negative electrode active material may be reduced to suppress side reactions with the electrolyte. Also, when the primary particles, which are silicon nanoparticles, expand, the amorphous carbon serves to buffer this expansion. Further, because the amorphous carbon filled between the primary particles acts as a binder, there may be less breakage of the negative electrode active material particles and improving conductivity.

The amorphous carbon may be soft carbon, hard carbon, mesophase pitch carbide, calcined coke, or a combination thereof.

### Rechargeable lithium battery

According to an embodiment, the rechargeable lithium battery includes a negative electrode including the negative electrode material for the rechargeable lithium battery; and a positive electrode.

The negative electrode for a rechargeable lithium battery may include a current collector and a negative electrode active material layer on the current collector. The negative electrode active material layer may include the negative electrode active material as described above. In a specific example, the negative electrode active material may be included in an amount of 95 wt% or more, for example, 95 to 100 wt%, of the total negative electrode active material in the negative electrode active material layer. In addition to the negative electrode active material (first negative electrode active material), the negative electrode active material layer may further include a different negative electrode active material (second negative electrode active material).

The second negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy. In the formula Si-Q, Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. In one embodiment, the silicon-carbon composite may be in a form of silicon particles, with amorphous carbon coated on the surfaces of the silicon particles. For example, the silicon-carbon composite may include a secondary particles (core) in which primary silicon particles are assembled, and an amorphous carbon coating layer (shell) on the surfaces of the secondary particles. The amorphous carbon may also be between the primary silicon particles, and the primary silicon particles may be coated with the amorphous carbon. The secondary particles may exist in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof. The conductive material may be used to impart conductivity (e.g., electrical conductivity) to the electrode. Any material that does not cause an undesirable chemical change in a rechargeable lithium battery and that conducts electrons can be used as the conductive material in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector may be a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof. As examples, compounds represented by any one of the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in a rechargeable lithium battery and conducts electrons can be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector, but is not limited thereto.

### Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on the type of rechargeable lithium battery, a separator may be present between the positive and negative electrodes. Such separators include polyethylene, polypropylene, polyvinylidene fluoride, or multilayer films comprising two or more layers thereof. Furthermore, mixed multilayer films, such as a polyethylene/polypropylene two-layer separator, a polyethylene/polypropylene/polyethylene three-layer separator, or a polypropylene/polyethylene/polypropylene three-layer separator, may also be used.

The separator may include a porous substrate and a coating layer comprising an organic material, an inorganic material, or a combination thereof, positioned on one or both surfaces of the porous substrate. The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, cyclic olefin copolymer, polyphenylene sulfide, polyethylene naphthalate, glass fiber, and polytetrafluoroethylene (e.g., TEFLON^{®}), or a copolymer or mixture of two or more thereof. The organic material may include a polyvinylidene fluoride-based polymer or a (meth)acrylic polymer. The inorganic material may include, but is not limited to, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. The organic and inorganic materials may be mixed in one coating layer or may be present in a laminated form with a coating layer including an organic material and a coating layer including an inorganic material.

The rechargeable lithium battery may be cylindrical, prismatic, pouch, or a coin-type, and the like depending on its shape.

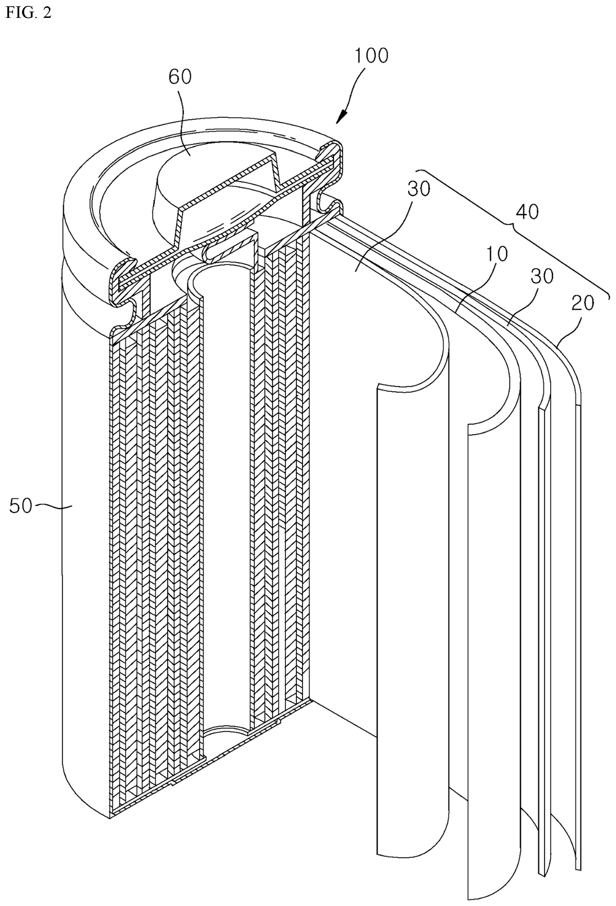

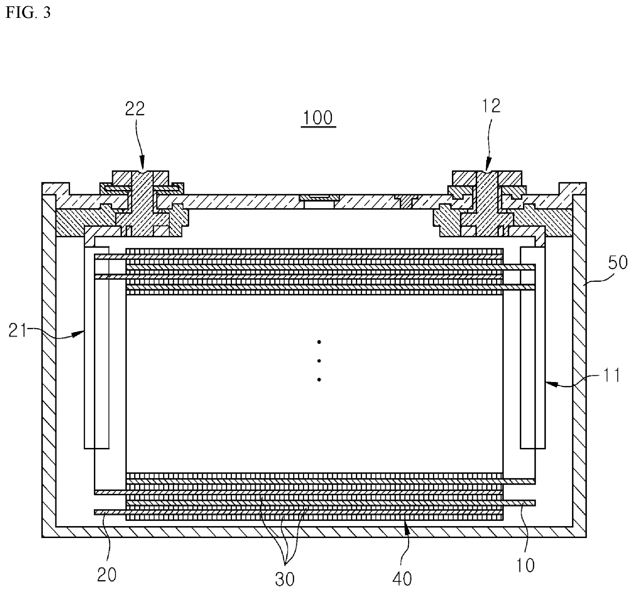

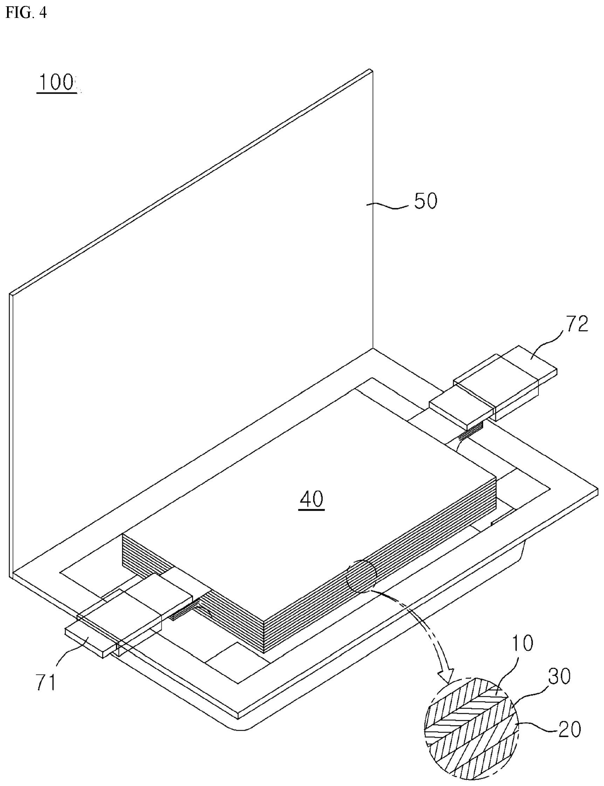

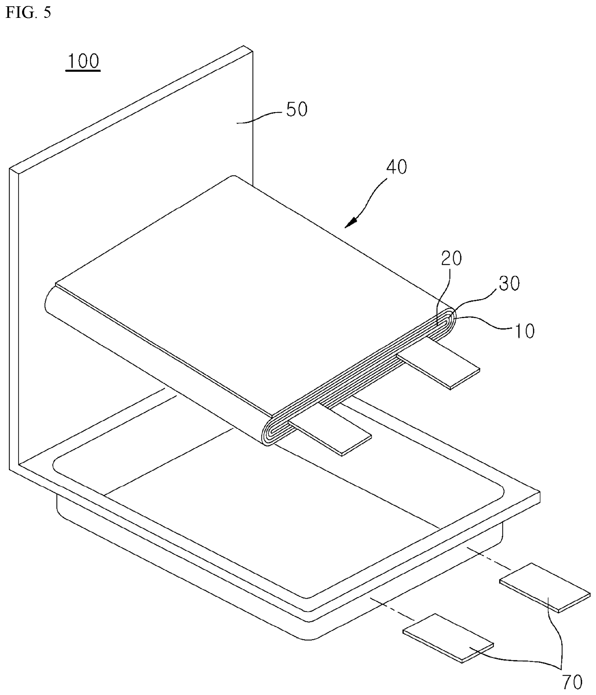

FIGS. 2 to 5 are schematic views of rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, a rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. As shown in FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be a positive electrode tab 71 or a negative electrode tab 72 and form an electrical path for inducing the current formed in the electrode assembly 40 to outside of the battery.

The rechargeable lithium battery according to embodiments may be used in automobiles, mobile phones, and/or various types of electric devices, as non-limiting examples.

Hereinafter, examples and comparative examples of the present disclosure will be described. However, the present disclosure is not limited to the following examples.

### Example 1

n-Hexane, silicon precursor particles (having an average particle diameter D50 of approximately 1 µm), and a mixture of graphite and mesophase pitch (graphite and mesophase pitch present in a weight ratio of 50:50 based on 100 parts by weight of the mixture) were mixed in a weight ratio of 8: 1: 1 (n-Hexane: silicon precursor particles : the mixture of graphite and mesophase pitch). The mixture was put into a bead mill equipped with zirconium balls and then milled at 25 °C for 12 hours to prepare a dispersion including the silicon nanoparticles. Graphene in the dispersion had an aggregated structure, and a first silicon-carbon composite including the silicon nanoparticles and mesophase pitch in the aggregated structure of the graphene was prepared.

The viscosity of the n-hexane at 25 °C was 0.5 mPa·s. The viscosity was a value evaluated by the rotational viscometer method in a Brookfield model (model name: DVELV). In the viscosity measurement, the spindle rotation speed was set to 30 rpm and the measurement was performed at 25 °C.

The prepared dispersion was spray-dried at 100 °C to prepare secondary particles in which the first silicon-carbon composite was assembled.

The prepared secondary particles and the mesophase pitch were mixed in a weight ratio (the prepared secondary particles : the mesophase pitch) of 55:45 based on a total of 100 parts by weight of the secondary particles and the mesophase pitch. The mixture was heat-treated at 900 °C for an hour under a N₂ atmosphere to prepare a product.

The obtained product was pulverized to obtain a pulverized material. The pulverized material and mesophase pitch were mixed in a weight ratio (the pulverized material : mesophase pitch) of 95:5, and added to a mixed solvent of distilled water and ethanol in a weight ratio (distilled water : ethanol) of 3:1. The mixture and solvent were stirred at 25 °C for 2 hours, dried at 100 °C, and then heat-treated at 900 °C for an hour under a N₂ atmosphere to prepare a second silicon-carbon composite as the negative electrode active material.

The negative electrode active material included a core in which graphene is aggregated and silicon nanoparticles and amorphous carbon are included in the aggregated graphene, and an amorphous carbon-containing layer surrounding the core and including amorphous carbon.

97.5% by weight of a mixture of artificial graphite and the prepared negative electrode active material, where artificial graphite and the prepared negative electrode active material were in a weight ratio of 87:13 based on a total of 100 parts by weight of the mixture, 1% by weight of a styrene butadiene rubber (SBR) as a binder, and 1.5% by weight of carbon nanotubes as a conductive material were mixed in distilled water to prepare a negative electrode active material slurry. The negative electrode active material slurry was applied to a copper foil, dried, and then rolled to make a negative electrode. A half-cell battery was made using the negative electrode, a lithium metal counter electrode, and an electrolyte. The electrolyte was a mixed solvent (volume ratio of 3:7) of ethylene carbonate and dimethyl carbonate in which 1 M LiPF₆ is dissolved.

### Example 2

A negative electrode active material was prepared in the same manner as in Example 1, except that the weight ratio of graphite and mesophase pitch in the mixture was changed to 10:90.

### Example 3

A negative electrode active material was prepared in the same manner as in Example 1, except that the weight ratio of graphite and mesophase pitch in the mixture was changed to 20:80.

### Comparative Example 1

n-Hexane and silicon precursor particles having an average particle diameter D50 of approximately 1 µm were mixed at a weight ratio of 9:1, put into a bead mill equipped with zirconium balls, and then milled at 25 °C for a milling time of 12 hours to prepare a dispersion including the silicon nanoparticles.

The prepared dispersion was spray-dried at 100 °C to prepare secondary particles in which the silicon nanoparticles were assembled.

The prepared secondary particles and the mesophase pitch were mixed in a weight ratio of 55:45 based on a total of 100 parts by weight of the secondary particles and the mesophase pitch. The mixture was heat-treated at 900 °C for an hour under a N₂ atmosphere to prepare a product.

The product was pulverized to obtain a pulverized material, and the obtained pulverized material and mesophase pitch were mixed in a weight ratio of 95:5, and added to a mixed solvent (distilled water and ethanol in a weight ratio of 3:1), stirred at 25 °C for 2 hours, dried at 100 °C, and then heat-treated at 900 °C for an hour under a N₂ atmosphere to prepare a silicon-carbon composite as the negative electrode active material.

A slurry and a half-cell battery were made in the same manner as in Example 1 using the prepared negative electrode active material.

### (Experimental Evaluation 1) Evaluation of negative electrode active material

Concentration of oxygen in negative electrode active material (units: % by weight)

The concentration of oxygen in the negative electrode active material was evaluated by a solid-state infrared absorption method using an ONH oxygen analyzer (Chongqing YanRui Instrument Co., Ltd). The measurement conditions were 3,000 °C, a N₂ purity of 99.999% or more, and a pressure of 0.25 MPa.

### (Experimental Evaluation 2) Evaluation of battery characteristics

### Capacity according to the number of cycles

The half-cell batteries were charged and discharged at 0.1 C to measure the charge and discharge capacities. The measured discharge capacity was divided by the weight of the negative electrode active material to calculate the specific capacity, and the charge and discharge efficiency (discharge capacity/charge capacity ratio) was measured.

The half-cell batteries were subjected to 0.2 C constant current (CC) and constant voltage (CV) charging and 0.2 C discharging once; 0.5 C constant current (CC) charging and 0.2 C discharging once; 1 C constant current (CC) charging and 0.2 C discharging once; and 2 C constant current (CC) charging and 0.2 C discharging once to calculate the charging characteristics. The charging was performed under a cut-off condition of 10 mV in the constant current (CC) section and a 15-hour cut-off condition in the constant voltage (CV) section, and the discharging was performed under a 1.5 V cut-off condition. The charging characteristics were measured at each C-rate. The charging characteristic results were expressed by calculating the ratio of the 2 C CC charge capacity to the 0.2 C CC charge capacity.

**Table 1**

| | Oxygen concentration (% by weight) | Specific capacity (mAh/g) | Efficiency (%) | Charging rate (%) |
|---|---|---|---|---|
| Example 1 | 8.2 | 1519 | 88.3 | 39 |
| Example 2 | 7.7 | 1648.5 | 89.7 | 44 |
| Comparative Example 1 | 10.95 | 1562 | 86.6 | 32 |

As shown in Table 1, the negative electrode active materials of the examples provided improved battery capacity and lifespan because the negative electrode active materials had a low oxygen concentration. On the other hand, the negative electrode active material of the comparative example had a high oxygen concentration because the negative electrode active material was prepared by milling without graphite.

According to embodiments of the present disclosure, a method of preparing a negative electrode active material for a rechargeable lithium battery shortens milling time of silicon precursor particles for preparing silicon nanoparticles, which thereby improves processability.

According to embodiments of the present disclosure, a negative electrode active material for a rechargeable lithium battery provides for improved battery capacity and improved lifespan due to the low oxygen concentration.

Although the preferred embodiments of the present disclosure have been described above, the present disclosure is not limited thereto. Rather, various changes and modifications can be made by those skilled in the art to which the present disclosure pertains.

## Claims

1. A negative electrode active material for a rechargeable lithium battery, the negative electrode active material comprising:
silicon nanoparticles;
graphene; and
an amorphous carbon precursor,
wherein the negative electrode active material has an oxygen content of 10% by weight or less.

2. A negative electrode active material for a rechargeable lithium battery, comprising:
a core including silicon nanoparticles, graphene, and amorphous carbon; and
an amorphous carbon-containing layer disposed on the core,
wherein the negative electrode active material has an oxygen content of 10% by weight or less.

3. The negative electrode active material of claim 1 or claim 2, wherein the silicon nanoparticles are present between sheets of the graphene.

4. The negative electrode active material of any one of claims 1 to 3, wherein the silicon nanoparticles have an average particle diameter (D50) of 10 nm to 200 nm.

5. The negative electrode active material of claim 1, wherein:
(i) based on the total weight of the negative electrode active material, the silicon nanoparticles are included in an amount of 30 to 75% by weight, the graphene is included in an amount of 1 to 30% by weight, and the amorphous carbon precursor is included in an amount of 20 to 60% by weight; and/
(ii) the amorphous carbon precursor is mesophase pitch.

6. The negative electrode active material of claim 2, wherein the amorphous carbon is soft carbon, hard carbon, mesophase pitch carbide, calcined coke, or a combination thereof.

7. The negative electrode active material of claim 2 or claim 6, wherein, based on a total of 100 parts by weight of the silicon nanoparticles, the graphene, and the amorphous carbon, the silicon nanoparticles, the graphene, and the amorphous carbon are included in the negative electrode active material in a weight ratio of 38 to 50:6 to 18:34 to 52.

8. The negative electrode active material of any one of claims 2, 6, and 7 wherein the negative electrode active material has an average particle diameter (D50) of 2 µm to 15 µm.

9. The negative electrode active material of any one of claims 1 to 8, wherein the negative electrode active material is spheroidized by milling.

10. A method of preparing a negative electrode active material for a rechargeable lithium battery, the method comprising:
milling silicon precursor particles, graphite, and an amorphous carbon precursor in a milling solvent having a viscosity of 0.1 to 1 mPa·s at 25 °C.

11. The method of claim 10, wherein the milling solvent is n-hexane.

12. The method of claim 10 or claim 11, wherein:
(i) in the milling step, based on a total of 100 parts by weight of the milling solvent, the silicon precursor particles, and the mixture of the graphite and the amorphous carbon precursor, the milling solvent, the silicon precursor particles, and a mixture of the graphite and the amorphous carbon precursor are included in a weight ratio of 70 to 99:0.5 to 15:0.5 to 15; and/or
(ii) based on a total of 100 parts by weight of the graphite and the amorphous carbon precursor, the graphite and the amorphous carbon precursor are included in the mixture of the graphite and the amorphous carbon precursor in a weight ratio of 10 to 50:50 to 90.

13. The method of any one of claims 10 to 12, wherein:
(i) the milling step includes preparing silicon nanoparticles from the silicon precursor particles, and
wherein the silicon nanoparticles have an average particle diameter (D50) of 10 nm to 200 nm; and/or
(ii) the method further comprises mixing a first silicon-carbon composite prepared in the milling step or an assembly of the first silicon-carbon composite with an amorphous carbon precursor, and then heat-treating the mixture.

14. A rechargeable lithium battery comprising a negative electrode including the negative electrode active material for a rechargeable lithium battery of any one of claims 1 to 9.

15. A rechargeable lithium battery comprising a negative electrode including the negative electrode active material prepared the method of preparing a negative electrode active material for a rechargeable lithium battery of any one of claims 10 to 13.
